Europäisches Patentamt

European Patent Office

Office européen des brevets

(11) Publication number: **0 385 767**
**A2**

# EUROPEAN PATENT APPLICATION

(21) Application number: 90302167.3

(51) Int. Cl.⁵: **H04N 7/14**

(22) Date of filing: 28.02.90

(30) Priority: 28.02.89 KR 249789

(43) Date of publication of application:
**05.09.90 Bulletin 90/36**

(84) Designated Contracting States:
**DE ES GB SE**

(71) Applicant: **GOLDSTAR CO. LTD.**
**20, Yoido-Dong Youngdungpo-Ku**
**Seoul(KR)**

(72) Inventor: **Hong, Sam Pyo**
**184, Kongdan-Dong, Kumi**
**Kyungsangbook-Do(KR)**

(74) Representative: **Palmer, Roger et al**
**PAGE, WHITE & FARRER 54 Doughty Street**
**London WC1N 2LS(GB)**

(54) **Video phone system.**

(57) Video phone system capable of displaying the picture of other party upon telephone talking, and particularly, capable of recording index signal upon recording the video data to a tape so that the video data can easily be searched. The video phone system comprising A/D converter, central processing unit, gate array, D/A converter, video amplifying and synthesizing unit, interface, memory, a switch for selecting the output signal of the interface, a binary counter for counting the number of pulses of the index signal, and a comparator for comparing the counted signals of the binary counter with the search signals of the central processing unit to apply a starting signal to the central processing unit.

FIG.4

EP 0 385 767 A2

## VIDEO PHONE SYSTEM

The present invention relates to a video phone system for displaying a picture of other party by receiving it at the time of talking over the telephone, and particularly, to a video phone system in which an index signal is simultaneously recorded upon recording a picture data to tape so that enabling said picture data to be discriminated more simply and easily.

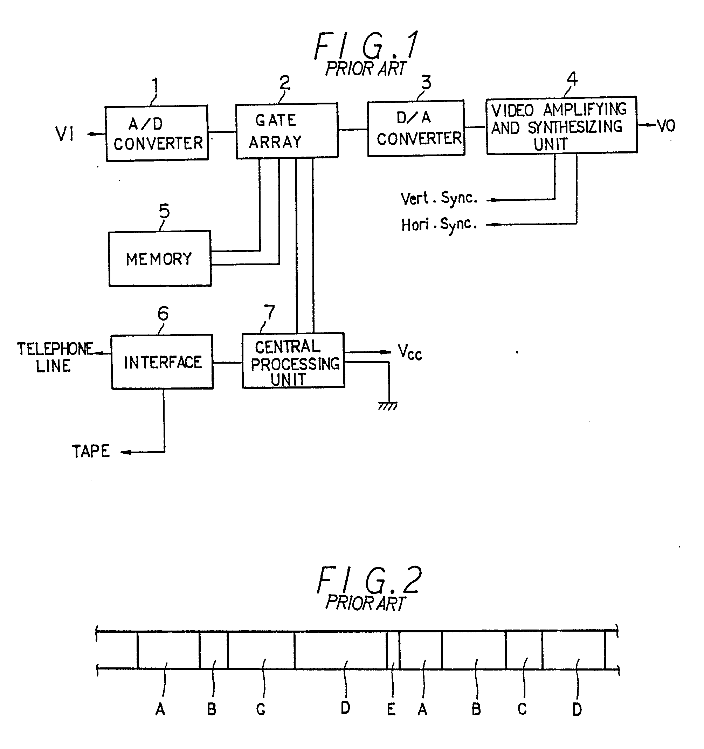

FIG. 1 is a block diagram for illustrating the configuration of conventional video phone system, as shown in the drawing, which is comprised of analog/digital converter 1 for converting analog video signal VI outputted from video camera and the like into digital signal; central processing unit 7 for receiving and transmitting the video data through interface 6 and for executing various controls; gate array 2 for either outputting the data outputted from said analog/dagital converter 1 as they are, or recording the data outputted from said analog/digital converter 1 and video data received to said central processing unit 7 into memory 5 by receiving the control of said central processing unit 7, and reading out the data recorded in said memory 5 and then outputting in accordance with the control of said central processing unit 7; digital/analog converter 3 for converting the output data of said gate array 2 into analog signal; and video amplifying and synthesizing means 4 for synthesizing the output signal of said digital/analog converter 3 with vertical synchronozation signal and horizontal synchro nization signal and then reproducing to original video signal and thereafter applying to monitor or the like.

Fig. 2 is an explanatory view showing the form of transmitting the data by a central processing unit 7 to a telephone line or a tape through an interface 6. As shown in Fig. 2, after transmitting a dual-tone signal A which is a synthesized signal of 1.6KHz and 2KHz, leaving the stop period B of approximately 0.4 second, and then transmitting various control information signals C and video data in order. On the various control information signals C various informations such as the format state, length and the like for enabling the receiving side to correctly read the video data D are carried.

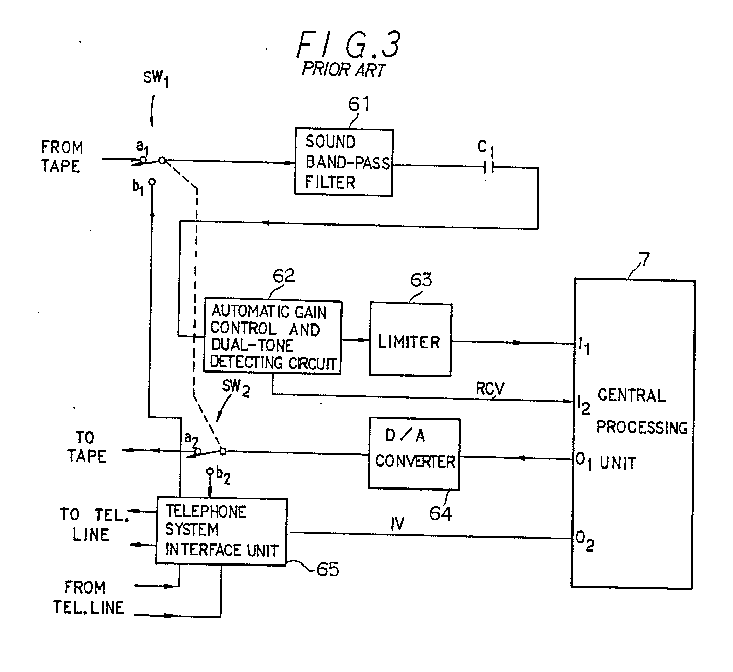

Fig. 3 is a detailed block diagram of the interface 6 of Fig. 1, which is structured such that the data received by a telephone system interface unit 65 or the data reproduced from a tape are selected at a switch $SW_1$ and then applied to an input terminal $I_1$ of the central processing unit 7 through a sound band-pass filter 61, a capacitor $C_1$, an automatic gain control and dual-tone detecting circuit 62 and a limiter 63, and transmission data outputted from an output terminal $O_1$ of the central

processing unit 7 are selected at a switch $SW_2$ through a digital/analog converter 64 and then applied to tape or the telephone system interface unit 65.

The operational process will be described hereinafter.

Analog video signal VI outputted from video camera and the like is converted into digital signal at analog/digital converter 1 and then outputted through the gate array 2, thus outputted video data are converted into analog signal at digital/ analog converter 3 and then synthesized with vertical synchronization signal and horizontal synchronization signal whereby being reproduced to original video signal at video amplifying and synthesizing unit 4, and this reproduced signal VO is applied to monitor whereby displayed, so that it becomes possible to be seen in talking condition.

In this state, when it becomes the stop mode by handling of user, control signal according to said stop mode is outputted from the central processing unit 7 and applied to the gate array 2, accordingly, the gate array 2 records the video data of the amount of one frame of video data outputted by converting into digital signal at the analog/digital converter 1 to the transmitting region of memory 5 and thereafter immediately disabling the analog/digital converter 1, and outputting the video data of the amount of one frame recorded at said transmitting region of memory 5, and these outputted video data are applied to the monitor through the digital/analog converter 3 and the video amplifying and synthesizing unit 4 as described above whereby being displayed as a still picture.

In this state, when it becomes the transmitting mode by the handling of user, the control signal according to said transmitting mode is outputted from the central processing unit 7 and applied to the gate array 2, accordingly, the gate array 2 reads out and then outputting the video data recorded at the transmitting region of the memory 5, and said outputted video data are modulated with AM or AM-PM at the central processing unit 7 and thereafter transmitted to the telephone line through the interface 6, wherein the reason of modulating is because the cut-off frequency of the telephone line is limited to 3.4 KHz.

And, when the video data are transmitted from said central processing unit 7, dual-tone signal, stop period, control information signal and video data are output from its output terminal $O_1$, and the transmission data are converted into digital signals by the digital/analog converter 64. At this moment, when the switch $SW_2$ is selected in a telephone line-state, that is, the switch $SW_2$ is connected to

its fixed terminal $b_2$, the transmission signal converted into analog signal by the digital/analog converter 64 passes through the switch $SW_2$, and then transmitted to a telephone line through the telephone system interface unit 65 which is under the control of the central processing unit 7.

On the other hand, in case when the video data are received at the interface 6 through the telephone line, the received signal is applied to the automatic gain control and dual-tone detecting circuit $b_2$ through the telephone system interface unit 65, switch $SW_1$, sound band-pass filter 61 and capacitor $C_1$. At this moment, the firstly received dual-tone signal is detected at the automatic gain control and dual-tone detecting circuit 62 and applied to an input terminal $I_2$ of the central processing unit 7 in a receiving-state signal RCV, thus the central processing unit 7 receives various control information signals and video data which are applied to the input termainal $I_1$ through the automatic gain control and dual-tone detecting circuit 62 and limiter 63, and then con vert and demodulate them into digital signals by the analog/digital converter, thereafter the demodulated video data are recorded in the receiving region of the memory 5 through the gate array 2.

When these recording operations are completed, the video data recorded in the receiving region of the memory 5 are read at the gate arrary 2 upon the control of the central processing unit 7 and then continuously outputting them, and these outputted video data are displayed on the minitor through the digital/analog converter 3 and video amplifying and synthesizing unit 4 as described above, and therefore, the received picture becomes possible to be seen in stop state.

And thereafter, when the video data recorded in the memory are desired to record on a tape by the handling of user, the switches $SW_1$ and $SW_2$ are short-circuited to their fixed terminals $a_1$ and $a_2$, and the video data recorded in the memory 5 are read and outputted at the gate array 2 upon the control of the central processing unit 7, and these video data are modulated at the central processing unit 7 as similar as aforementioned transmitting condition, and thereafter the dual-tone signal, stop period, control information signals and video data are sequentially outputted from the output terminal $O_1$ and applied to the tape through the digital/analog converter 64 and switch $SW_2$ whereby becoming to be recorded.

When reproducing the video data recorded on the tape, said reproduced signals are applied to the central processing unit 7 through the switch $SW_1$, sound band-pass filter 61, capacitor $C_1$, automatic gain control and dual-tone detecting circuit 62 and limiter 63, as similar as aforementioned receiving condition, and thereafter recorded to the receiving region of the memory 5 through the gate array 2 upon the control of said central processing unit 7, and the data recorded at the receiving region of said memory 5 are applied to the monitor through the gate array 2, digital/analog converter 3 and video amplifying and synthesizing means 4 and thereby becoming to be displayed.

However, in such conventional video phone system, in case when the video data are recorded repeatedly to the tape, each video data may not be discriminated at the time of reproducing said tape, and therefore, there has been disadvantage that it takes a considerable time to search a wanted picture.

Therefore, the object of the present invention is to provide a video phone system wherein picture is displayed on a monitor by seaching automatically the picture by an index signal assigned to each picture so that user can seach the wanted picture more easily and simply.

The above object of the present invention is accomplished by recording an index signal, prior to recording a dual-tone signal, to a tape, when recording video data to the tape, processing video data to display on a monitor when firstly reproduced index signal is identical to the selection signal that user is searching for.

The above and other objects, features and advantages of the present invention will become apparent from the following detailed description of the accompanying drawings, in which;

FIG. 1 is a block diagram illustrating the configuration of a conventional video phone system,

FIG. 2 is a diagram illustrating the form of recording the data to conventional tape,

FIG. 3 is a detailed block diagram of an interface of FIG. 1,

FIG. 4 is a detailed diagram of an interface according to the present invention,

FIG. 5 is an explanatory view showing the form of recording the data to a tape according to the present invention,

FIGS. 6A and 6B are waveform charts illustrating the data transmission state of the present invention,

FIG. 7 is a flow chart illustrating the data receiving state of the present invention, and

FIG. 8 is a flow chart illustrating the data transmission state of the present invention.

Hereinafter, a preferred embodiment of the present invention will be described in detail with reference to the accompanying drawings.

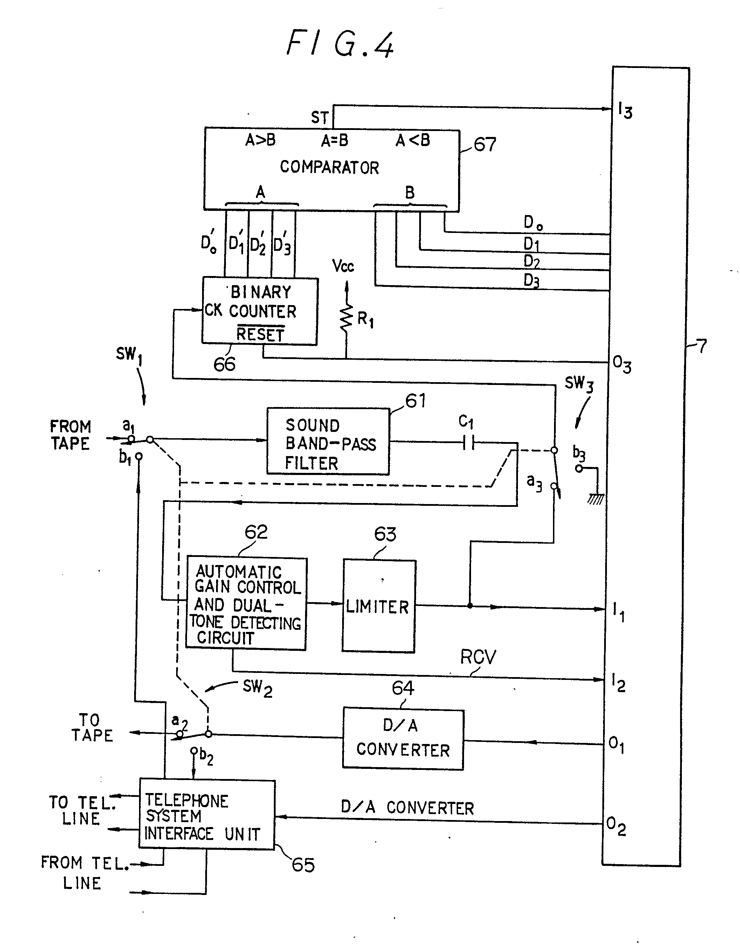

FIG. 4 is a detailed block diagram of an interface of the video phone system of a preferred embodiment of the present invention. As shown in the drawing, the interface is constituted in such that the data received at a telephone system interface unit 65 or the data reproduced from a tape are selected by a first switch $SW_1$ and then applied to an input terminal $I_1$ of a central processing unit 7 through the sound band-pass filter 61, capacitor $C_1$, automatic gain control and dual-tone detecting circuit 62 and limiter 63, and when a dual-tone signal is detected by the automatic gain control and dual-tone detecting circuit 62, the selected data are applied to an input terminal $I_2$ of the central processing unit 7 as a receiving-state signal RCV, and the transmission data outputted from an output terminal $O_1$ of the central processing unit 7 are selected by a second switch $SW_2$ through a digital/analog converter 64 and applied to tape or telephone system interface unit 65. The interface further comprises a third switch $SW_3$ which selects the output signal of the limiter 63, a binary counter 66 which counts the number of pulses of index signal passing through the third switch $SW_3$, and a comparator 67 which applies a starting signal ST to the central processing unit 7 when the counted signals $D_0{'}$-$D{'}_3$ of the binary counter 66 are identical to the search signals $D_0$-$D_3$ of the central processing unit 7.

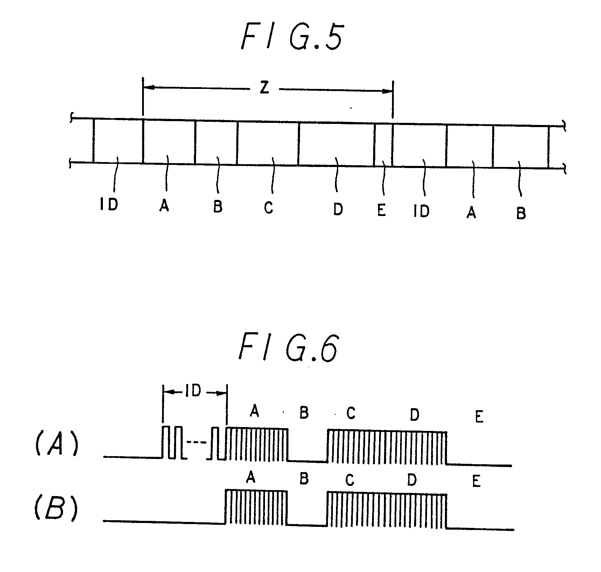

FIG. 5 shows the form of recording the data to a tape according to the present invention. As shown in FIG. 5, index signal ID is recorded before the dual-tone signal A.

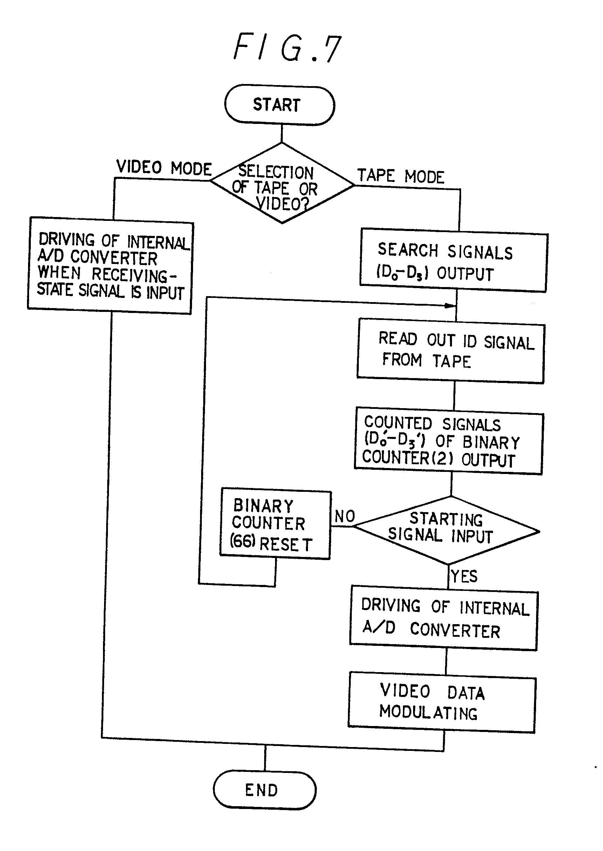

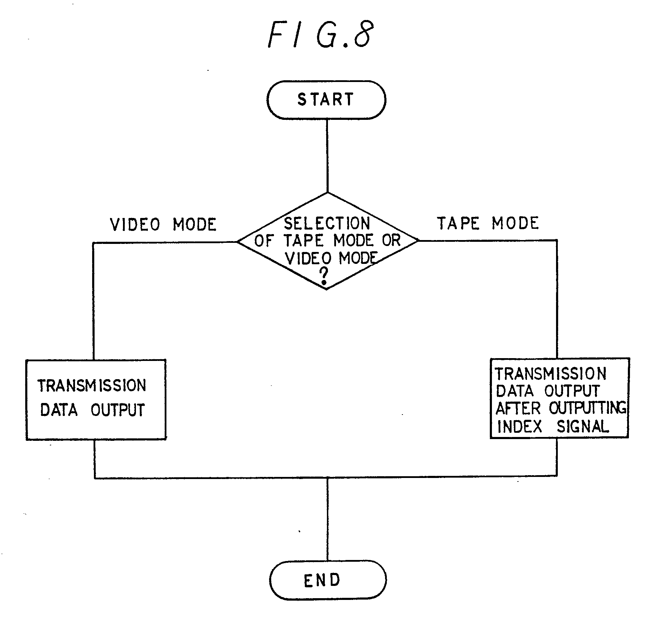

The operation and effect of the present invention will now be described in detail with reference to the waveform views of FIG. 6A and FIG. 6B and flow-charts of FIG. 7 and FIG. 8.

When the system is set to a transmission mode by a handling of user, video data recorded in the transmission region of the memory 5 are read out by the gate array 2 upon the control of the central processing unit 7, and the video data are modulated in the central processing unit 7 and then transmitted to a telephone line through the interface 6 as shown in FIG. 8. At this moment, the dual-tone signal A is firstly outputted from the output terminal $O_1$ of the central processing unit 7 and after the stop period B of 0.4 second, various control information signal C and video data D are sequentially outputted. Thus outputted transmission data are converted into analog signals in the digital/analog converter 64. At this moment, since the mode is telephone line selection-state the second switch $SW_2$ is short-circuited to its fixed terminal $b_2$, accordingly the output signals of the digital/analog converter 64 are transmitted to the telephone line through the telephone system interface unit 65 which is under the control of the second switch $SW_2$ and central processing unit 7.

On the other hand, in case of recording the data to a tape, index signal is output before the central processing unit 7 outputs the dual-tone signal A through its output terminal $O_1$, and then the dual-tone signal A, stop period B, various control information signal C and video data D are sequentially output. Thus outputted signals are converted into analog signals in the digital/analog converter 64. At this moment, since the second switch $SW_2$ is short-circuited to its fixed terminal $a_2$ the output signals of the digital/analog converter 64 are recorded in the tape through the second switch $SW_2$.

In case that the video data and the like are received by the interface 6 through telephone line, they are applied to the central processing unit 7 through the interface 6 and being processed and then displayed on a monitor as same as the description of FIGS. 1 and 3.

On the other hand, in case of reproducing the tape in which data are recorded as above, the switches $SW_1$-$SW_3$ are short-circuited to their fixed terminals $a_1$-$a_3$ and search signals $D_0$-$D_3$ are outputted from the central processing unit 7 as shown in FIG. 7 and applied to the comparator 67 as a reference signal. Accordingly, the signals being reproduced from the tape are applied to the input terminal $I_1$ of the central processing unit 7 through the first switch $SW_1$, sound band-pass filter 61, capacitor $C_1$, automatic gain control and dual-tone detecting circuit 62 and limiter 63. At this moment, the index signal ID which passes firstly through the limiter 63 is applied to a clock terminal CK of the binary counter 66 through the third switch $SW_3$, accordingly the number of the index signal ID is counted by the binary counter 66 and the counted signals $D_0{'}$-$D_3{'}$ of the binary counter 66 are applied to the comparator 67 as a camparative signal. Accordingly, the comparator 67 compares the counted signals $D_0{'}$-$D_3{'}$ of the binary counter 66 with the search signals $D_0$-$D_3$ of the central processing unit 7 and when they are identical to each other the comparator 67 outputs the starting signal ST to apply to the input terminal $I_3$ of the central processing unit 7. As a result, the central processing unit 7 judges that it is not the video data to be searched if the starting signal ST is not inputted to its input terminal $I_3$ even when the receiving state signal RCV is inputted to its input terminal $I_2$ and then resets the binary counter 66 and does not drive an analog/digital converter provided therein. When the starting signal ST is inputted to the input terminal $I_3$ in a state that the receiving state signal RCV is input to the input terminal $I_2$, the central processing unit 7 judges that it is the video data to be searched and drives its internal analog/digital converter, and then converts and modulates the video data whis is applied through the limiter 63 to its input terminal $I_1$ into digital signal to record in the receiving region of the memory 5 via the gate array 2. The video data recorded as above are displayed on a monitor through the gate array 2, digital/analog converter 3 and video amplifying and synthesizing unit 4.

As described above in detail, the present invention has the effect that index signals are simultaneously recorded at each video data when recording video data in a tape in order to enable the wanted picture to be automatically seached by searching the index signal at the time of reproducing the tape, so that user can search the wanted picture more easily and simply.

## Claims

1. A video phone system comprises :
an analog/digital converter for converting analog video signal outputted from video camera and the like into digital signal;
a central processing unit for receiving and transmitting the video data through an interface and for executing various controls;
a gate array for either outputting the data outputted from the analog/digital converter, or recording video data outputted from the analog/digital converter and video data received by the central processing unit to a memory upon the control of the central processing unit, and reading out and outputting the video data recorded in the memory upon the control of the central processing unit;
a digital/analog converter for converting the output data of the gate array into analog signals;
a video amplifying and synthesizing unit for reproducing and applying the output signal of the digital/analog converter in the original video signal to a monitor;
a third switch means for selecting the output signal of the interface when reproducing the tape;
a binary counter for counting the number of pulses of the index signal which passes through the third switch means; and
a comparator for comparing the counted signals of the binary counter with the search signals of the central processing unit and applying a starting signal to the central processing unit when the compared signals are identical to each other.

2. A video phone system as claimed in claim 1, wherein index signal for discriminating each picture is output from the central processing unit before recording video data through the interface to a tape and then recorded in the tape through the interface.

$F I G .1$
PRIOR ART

VI → | A/D CONVERTER (1) | → | GATE ARRAY (2) | → | D/A CONVERTER (3) | → | VIDEO AMPLIFYING AND SYNTHESIZING UNIT (4) | → VO

Vert . Sync. →
Hori . Sync. →

| MEMORY (5) |

TELEPHONE LINE → | INTERFACE (6) | → | CENTRAL PROCESSING UNIT (7) | → Vcc

TAPE →

$F I G .2$
PRIOR ART

A    B    G    D    E    A    B    C    D

# FIG.3
## PRIOR ART

# FIG.4

# FI G.5

Z

ID    A    B    C    D    E    ID    A    B

# FI G.6

ID

(A)    A    B    C    D    E

(B)    A    B    C    D    E

EP 0 385 767 A2

# F I G . 7

```
                      ┌─────────┐
                      │  START  │
                      └─────────┘
                           │
         VIDEO MODE    ╱ SELECTION ╲    TAPE MODE
      ┌───────────────  OF TAPE OR  ───────────────┐
      │               ╲   VIDEO?   ╱                │
      │                   ╲     ╱                    │
      │                                             │
┌───────────────┐                          ┌──────────────────┐
│DRIVING OF      │                          │ SEARCH SIGNALS   │
│INTERNAL        │                          │ (D₀-D₃) OUTPUT   │
│A/D CONVERTER   │                          └──────────────────┘
│WHEN RECEIVING- │                                   │
│STATE SIGNAL IS │                                   │
│INPUT           │                                   │
└───────────────┘                          ┌──────────────────┐
                                            │ READ OUT ID      │
                                            │ SIGNAL FROM TAPE │
                                            └──────────────────┘
```

VIDEO MODE — SELECTION OF TAPE OR VIDEO? — TAPE MODE

DRIVING OF INTERNAL A/D CONVERTER WHEN RECEIVING-STATE SIGNAL IS INPUT

SEARCH SIGNALS $(D_0-D_3)$ OUTPUT

READ OUT ID SIGNAL FROM TAPE

COUNTED SIGNALS $(D_0'-D_3')$ OF BINARY COUNTER(2) OUTPUT

BINARY COUNTER (66) RESET — NO — STARTING SIGNAL INPUT — YES

DRIVING OF INTERNAL A/D CONVERTER

VIDEO DATA MODULATING

END

# FIG.8

START

SELECTION OF TAPE MODE OR VIDEO MODE ?

VIDEO MODE

TAPE MODE

TRANSMISSION DATA OUTPUT

TRANSMISSION DATA OUTPUT AFTER OUTPUTTING INDEX SIGNAL

END